# EUROPEAN PATENT SPECIFICATION

(11) **EP 3 114 408 B1**
(45) Date of publication and mention of the grant of the patent: **31.07.2019**
(21) Application number: 13817996.5
(22) Date of filing: 06.12.2013
(51) Int. Cl.: F23N 1/00

(54) **VALVE FOR A GAS COOKER**
GASVENTIL FÜR EINEN GAS KOCHER
ROBINET DE GAZ POUR UNE CUISINIÈRE À GAZ

(30) Priority: 13.12.2012 CN 201210556828
(43) Date of publication of application: 11.01.2017
(73) Proprietor: BSH Hausgeräte GmbH, 81739 München (DE); Zhejiang Xintao Electronic Machine Co., Ltd, Zhejiang provinces Xinchang Jiangsu 312500 (CN)
(72) Inventor: LIU, Shenchang, Nanjing Jiangsu 210000 (CN); REDONDO MORITZ, Jose, E-39610 Guarnizo-El Astillero (ES); ZHANG, Weiguo, Shaoxing City Xinchang County Zhejiang 312500 (CN)
(74) Representative: Lang, Michael
(86) International application number: PCT/IB2013/060699
(87) International publication number: WO 2014/091379

(56) References cited:
- EP-A2- 2 407 721
- CN-Y- 201 262 248
- US-A- 3 884 413

## Description

### BACKGROUND OF THE INVENTION

### Field of the Invention

The present invention relates to a valve for a gas cooker, and to a cooker with a valve according to the invention.

### Related Art

The valve of the existing gas cooker usually includes a valve body and a valve core, where the valve body is opened with a conical hole, and the valve core is rotatably assembled within the conical hole of the valve body. The valve core is provided with a gas inlet channel in communication with a gas source and a gas outlet. In use, the user rotates the knob of the gas cooker to rotate the valve core so as to adjust the gas flow, thereby adjusting firepower of the gas cooker. As described in related art of the Chinese Utility Model Patent CN201262248Y, when the valve of the existing gas cooker is used to adjust gas, in an adjustment process from maximum firepower to smaller firepower, the firepower does not change significantly even if the knob is rotated by a great angle in the beginning, but the firepower drops drastically only with a slight turn in the later period, which makes it difficult for the user to grasp the firepower adjustment of the gas cooker.

The Chinese Utility Model Patent CN201262248Y makes improvement to the structure of the valve core of the valve, trying to solve the above problem. In the patent, the cross sections of the gas outlet and the gas intake groove on the valve core are shaped into irregular curves, so as to overcome the disadvantage that change of the flow curve is not smooth enough when the flow is adjusted using an existing valve; however, in practical applications, the control over the flow by such a structure is not precise enough, and the control effect for the segment where the flow changes too rapidly (165° to 185°) is not obvious during the adjustment.

US 3,884,413 A describes a valve for a gas oven with a valve core being rotatably arranged in a valve body. The valve core has a slot-shaped and a circular-shaped gas outlet which communicate with gas channels being provided in the valve body.

EP 2 407 721 A2 describes a gas valve device and a gas stove. The gas valve device includes at least one gas inlet, a gas channel and a nozzle, in which the gas inlet is in communication with a main gas pipe, wherein one end of the gas channel is in communication with the gas inlet, the other end of the gas channel is in communication with the nozzle. The nozzle is used for supplying a burner with gas, a self-opening solenoid valve is disposed in the gas channel, when the self-opening solenoid valve is open, the gas flows to the nozzle through the self-opening solenoid valve. When the self-opening solenoid valve is closed, the gas is not able to flow to the nozzle through the self-opening solenoid valve.

### SUMMARY OF THE INVENTION

With respect to at least one technical problem above, the present invention provides a gas cooker having a smooth flow control curve according to claim 1.

To achieve the above objective, the present invention provides a gas cooker, including a valve, the valve including a valve body and a valve core rotatably disposed in the valve body, the valve core being provided with a gas inlet channel in communication with a gas source, a sidewall of the valve core being provided with an inner ring fire gas outlet and an outer ring fire gas outlet that penetrate the sidewall, where the valve body is provided with an inner ring main gas outlet channel and an inner ring fine-tuning channel corresponding to the inner ring fire gas outlet, and the valve body is provided with an outer ring main gas outlet channel and an outer ring fine-tuning channel corresponding to the outer ring fire gas outlet. During firepower adjustment, when the outer ring main gas outlet channel is staggered from the outer ring fire gas outlet, the outer ring fine-tuning channel will continue supplying gas within a certain angle rotation range, and after the inner ring main gas outlet channel is staggered from the inner ring fire gas outlet, the inner ring fine-tuning channel will continue supplying gas, so that the entire gas flow control curve

becomes smoother, thereby facilitating users in precisely controlling firepower of the gas cooker.

Further, an outer wall of the valve core is provided with an inner ring fire gas outlet groove in communication with the inner ring fire gas outlet, which can increase an effective stroke of the valve core, can control flow in a broader rotation angle range, and facilitates users in precisely controlling the firepower.

Further, an inner diameter of the inner ring fine-tuning channel is smaller than an inner diameter of the inner ring main gas outlet channel, and an inner diameter of the outer ring fine-tuning channel is smaller than an inner diameter of the outer ring main gas outlet channel, so as to realize fine tuning over the gas flow by means of the inner ring fine-tuning channel and the outer ring fine-tuning channel, thereby making the gas flow control curve change smoothly.

Preferably, the inner diameter of the inner ring fine-tuning channel is d1, where the d1 falls within a value range of 2.0 mm ≤ d1 ≤ 3.0 mm.

Preferably, the inner diameter of the outer ring fine-tuning channel is d2, where the d2 falls within a value range of 2.0 mm ≤ d2 ≤ 3.0 mm.

Preferably, the inner diameter of the inner ring main gas outlet channel is D1, where the D1 falls within a value range of 3.2 mm ≤ D1 ≤ 4.5 mm.

Preferably, the inner diameter of the outer ring main gas outlet channel is D2, where the D2 falls within a value range of 5.0 mm ≤ D2 ≤ 6.5 mm.

Further, the valve body is provided with an inner ring fine-tuning screw and an outer ring fine-tuning screw, where the inner ring fine-tuning screw adjusts gas flow of the inner ring fine-tuning channel, and the outer ring fine-tuning screw adjusts gas flow of the outer ring fine-tuning channel, which makes the gas cooker adapt to different gas sources and improves versatility of the gas cooker.

As a preferred implementation manner of the present invention, the valve core rotates at an angle of α relative to the valve body.

Preferably, when 0° ≤ α ≤ 30°, both the inner ring main gas outlet channel and the inner ring fine-tuning channel are completely staggered from the inner ring fire gas outlet groove; and both the outer ring main gas outlet channel and the outer ring fine-tuning channel are completely staggered from the outer ring fire gas outlet, which facilitates the user in grasping the adjustment scale and prevents fire from suddenly coming out of a burner the moment the knob is turned.

Preferably, when 30° < α < 210°, the inner ring main gas outlet channel at least partially faces the inner ring fire gas outlet groove, so that the flow of the gas cooker is controlled within a broader rotation angle range, thereby facilitating users in grasping the firepower adjustment.

Preferably, in order to maintain large fire in the inner ring of the burner within an appropriate rotation angle range, when 90° ≤ α ≤ 170°, the inner ring main gas outlet channel completely faces the inner ring fire gas outlet groove.

Preferably, in order to make the gas flow into the burner change smoothly and control the flow within a broader rotation angle range, when 90° ≤ α ≤ 230°, the inner ring fine-tuning channel at least partially faces the inner ring fire gas outlet groove.

Preferably, in order to maintain firepower in the outer ring of the burner within an appropriate angle range and satisfy the demand of the user for the outer ring fire, when 40° < α < 150°, the outer ring main gas outlet channel at least partially faces the outer ring fire gas outlet.

Preferably, when α = 90°, the outer ring main gas outlet channel completely faces the outer ring fire gas outlet.

Preferably, when 140° ≤ α < 195°, the outer ring fine-tuning channel at least partially faces the outer ring fire gas outlet, so that the outer ring fine-tuning channel continues supplying gas within a certain angle rotation range after no gas enters into the outer ring main gas outlet channel, which smoothens the gas flow change curve, prevents the outer ring fire from being extinguished suddenly, and prevents the gas flow from dropping drastically and being difficult to control.

### BRIEF DESCRIPTION OF THE DRAWINGS

FIG. 1 and FIG. 2 are perspective views of a valve core according to an embodiment of the present invention;
FIG. 3 is a sectional view of FIG. 1 along C-C line;
FIG. 4 is a top view showing a valve not mounted with a valve core according to the present invention;
FIG. 5A is a sectional view of FIG. 4 along A-A line;
FIG. 5B is a sectional view of FIG. 4 along B-B line;
FIG. 6A, FIG. 7A...FIG. 18A are views of changes of relative positions of an inner ring fire gas outlet groove, an inner ring main gas outlet channel and an inner ring fine-tuning channel during starting and firepower adjustment of a valve according to an embodiment of the present invention;
FIG. 6B, FIG. 7B...FIG. 18B are views of changes of relative positions of an outer ring fire gas outlet, an outer ring main gas outlet channel and an outer ring fine-tuning channel during starting and firepower adjustment of a valve according to an embodiment of the present invention; and
FIG. 19 is a view of a gas flow change curve during adjustment of a valve according to an embodiment of the present invention.

Description about reference signs in the figures:
1-valve, 10-valve body, 12-inner ring main gas outlet channel, 13-outer ring main gas outlet channel, 20-valve core, 21-gas inlet channel, 22-inner ring fire gas outlet, 23-outer ring fire gas outlet, 120-inner ring fine-tuning channel, 130-outer ring fine-tuning channel, 121-inner ring fine-tuning screw, 131-outer ring fine-tuning screw, 220-inner ring fire gas outlet groove.

### DETAILED DESCRIPTION OF THE EMBODIMENTS

In order to facilitate further comprehension for the objective, the structure, the features, and the functions of the present invention, the present invention is described below in detail with reference to the embodiments.

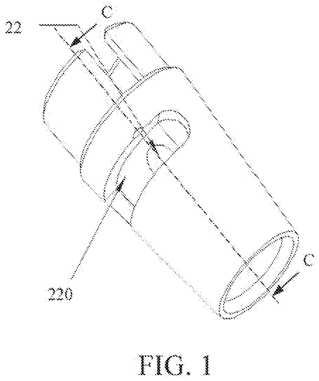

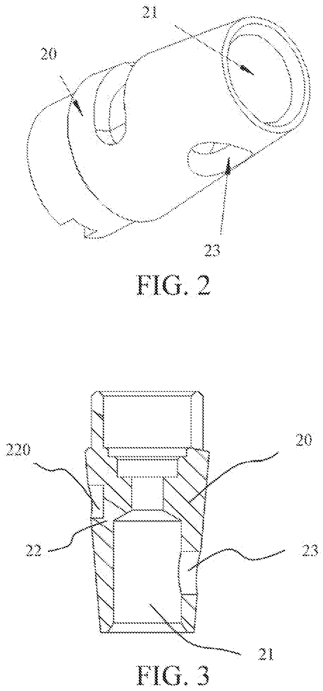

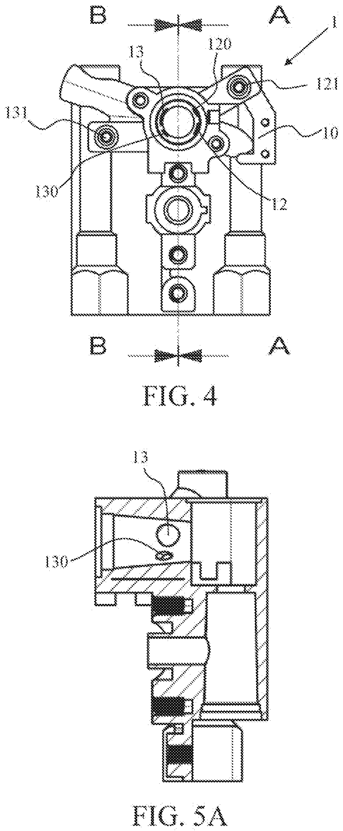

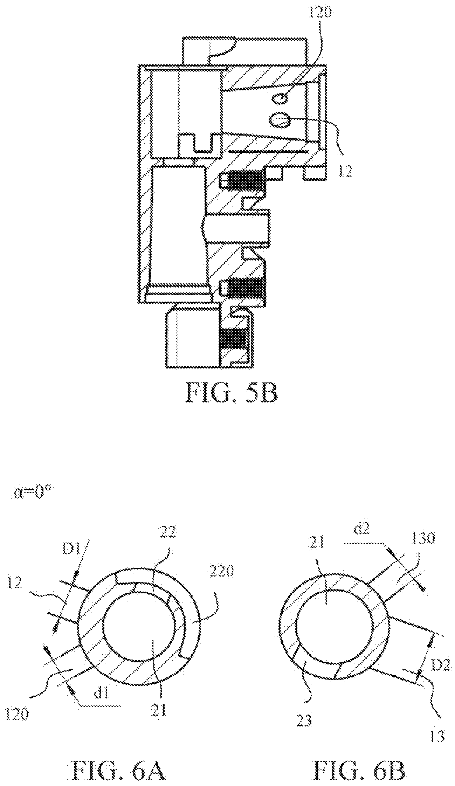

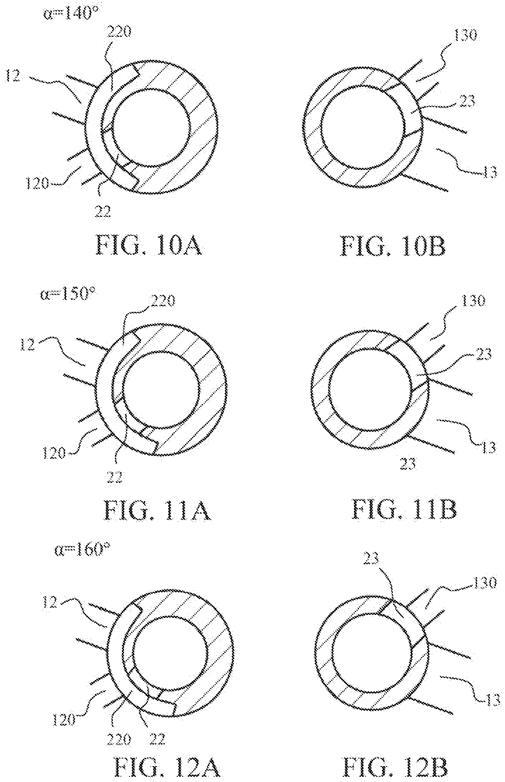

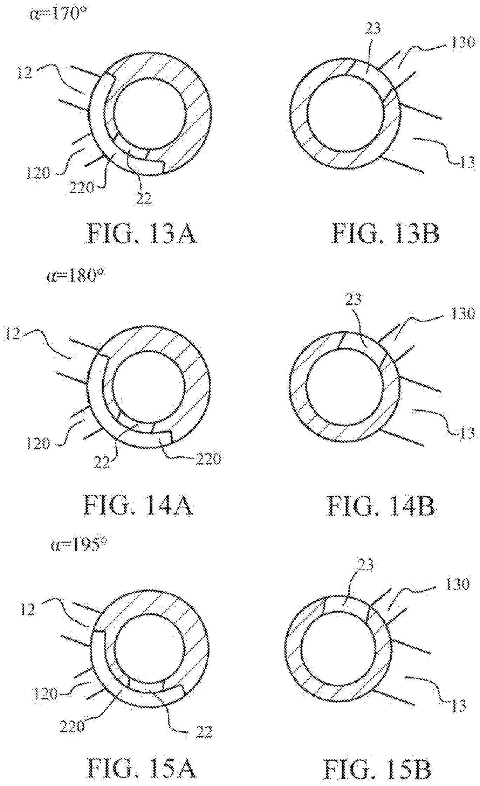

Referring to FIG. 1 to FIG. 19, the gas cooker in the present invention includes a valve 1. The valve 1 includes a valve body 10 and a valve core 20 rotatably disposed in the valve body 10. The valve core 20 is provided with a gas inlet channel 21 in communication with a gas source, and a sidewall of the valve core 20 is provided with an inner ring fire gas outlet 22 and an outer ring fire gas outlet 23 that penetrate the sidewall. The valve body 10 is provided with an inner ring main gas outlet channel 12 and an inner ring fine-tuning channel 120 corresponding to the inner ring fire gas outlet 22, and the valve body 10 is provided with an outer ring main gas outlet channel 13 and an outer ring fine-tuning channel 130 corresponding to the outer ring fire gas outlet 23. A burner of the gas cooker in the present invention includes a small fire cover disposed in the inner ring and a large fire cover disposed in the outer ring, where fire holes are distributed on the large fire cover and the small fire cover. The inner ring main gas outlet channel 12 and the inner ring fine-tuning channel 120 transport gas to the small fire cover in the inner ring of the burner, to generate inner ring fire; the outer ring main gas outlet channel 13 and the outer ring fine-tuning channel 130 transport gas to the large fire cover in the inner ring of the burner, to generate outer ring fire. Referring to FIG. 1 to FIG. 3, FIG. 1 and FIG. 2 are views of a valve core according to an embodiment of the present invention, and FIG. 3 is a sectional view of FIG. 1 along C-C line. In this embodiment, an outer wall of the valve core 20 is provided with an inner ring fire gas outlet groove 220 in communication with the inner ring fire gas outlet 22, and the inner ring fire gas outlet groove 220 runs annularly on the outer wall of the valve core 20, so that the gas cooker could maintain the inner ring fire within a broader rotation angle range. The gas inlet channel 21 is an axial opening on the valve core 20. Referring to FIG. 4, FIG. 5A and FIG. 5B in comparison with FIG. 1 to FIG. 3, the inner ring main gas outlet channel 12 has a height identical to that of the inner ring fine-tuning channel 120 in an axial direction of the valve core 20, and has a height consistent with that of the inner ring fire gas outlet groove 220 in the axial direction of the valve core 20. So, it is not difficult to understand that during rotation of the valve core 20, the inner ring fire gas outlet groove 220 can be communicated with the inner ring main gas outlet channel 12 and the inner ring fine-tuning channel 120, and then the gas can enter into the inner ring main gas outlet channel 12 and the inner ring fine-tuning channel 120. Similarly, the outer ring main gas outlet channel 13 has a height identical to that of the outer ring fine-tuning channel 130 in an axial direction of the valve core 20, and has a height consistent with that of the outer ring fire gas outlet 23 in the axial direction of the valve core 20.

In order to achieve fine tuning on the inner ring fire and the outer ring fire of the gas cooker, an inner diameter of the inner ring fine-tuning channel 120 is smaller than an inner diameter of the inner ring main gas outlet channel 12, and an inner diameter of the outer ring fine-tuning channel 130 is smaller than an inner diameter of the outer ring main gas outlet channel 13. As shown in FIG. 6A and FIG. 6B, the inner diameter of the inner ring fine-tuning channel 120 is d1, and a preferable range of the d1 is 2.0 mm ≤ d1 ≤ 3.0 mm. The inner diameter of the outer ring fine-tuning channel 130 is d2, and a preferable range of the d2 is 2.0 mm ≤ d2 ≤ 3.0 mm. As the distribution region of the outer ring fire is larger than that of the inner ring fire, it is natural that the inner diameter of the outer ring main gas outlet channel 13 is greater than that of the inner ring main gas outlet channel 12. The inner diameter of the inner ring main gas outlet channel 12 is D1, and a preferable range of the D1 is 3.2 mm ≤ D1 ≤ 4.5 mm. The inner diameter of the outer ring main gas outlet channel 13 is D2, and a preferable range of the D2 is 5.0 mm ≤ D2 ≤ 6.5 mm.

When the valve core 20 rotates at the same angle relative to the valve body 10, the gas flow of the inner ring fine-tuning channel 120 and the gas flow of the outer ring fine-tuning channel 130 will vary due to different gas sources (for example, liquefied gas and natural gas). To improve versatility of the gas cooker and make the gas cooker adapt to different sources, the valve body 10 is provided with an inner ring fine-tuning screw 121 and an outer ring fine-tuning screw 131, as shown in FIG. 4. The gas flow of the inner ring fine-tuning channel 120 is adjusted by adjusting the depth of rotation of the inner ring fine-tuning screw 121 into the valve body 10, and the gas flow of the outer ring fine-tuning channel 130 is adjusted by adjusting the depth of rotation of the outer ring fine-tuning screw 131 into the valve body 10.

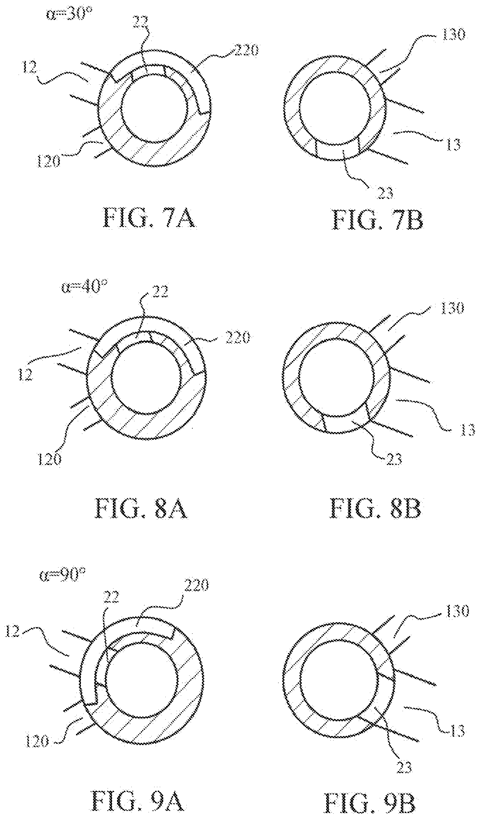

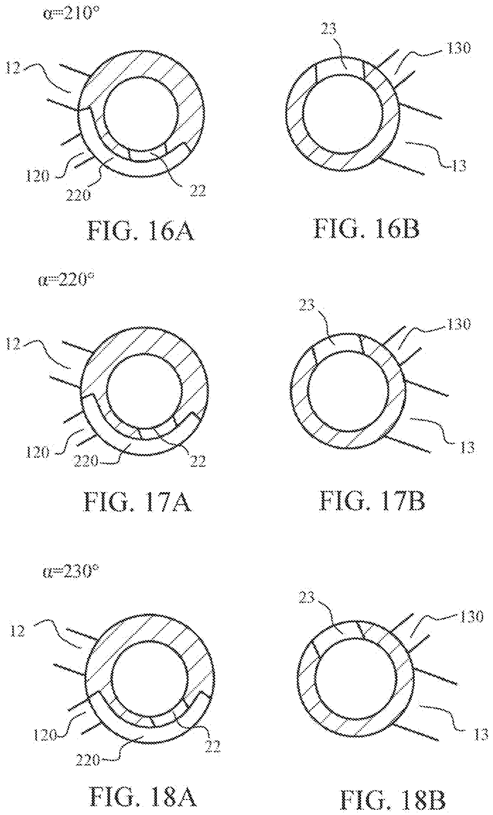

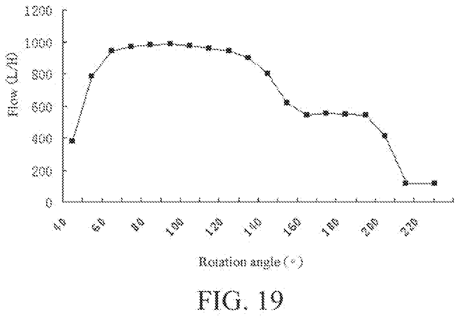

The valve core 20 rotates at an angle of α relative to the valve body 10. This embodiment is described by taking that the valve core 20 rotates counterclockwise as an example. In operation, the user rotates the knob to drive the valve core 20 to rotate, and counterclockwise rotation conforms to the general habits of the user who operates the knob with the right hand. However, the present invention is not limited thereto, and persons skilled in the art can conceive of that rotating the valve core 20 clockwise is also feasible. Referring to FIG. 6A and 6B to FIG. 18A and FIG. 18B in comparison with FIG. 19, FIG. 6A, FIG. 7A...FIG. 18A are views of changes of relative positions of an inner ring fire gas outlet groove, an inner ring main gas outlet channel and an inner ring fine-tuning channel during starting and firepower adjustment of a valve according to an embodiment of the present invention; FIG. 6B, FIG. 7B...FIG. 18B are views of changes of relative positions of an outer ring fire gas outlet, an outer ring main gas outlet channel and an outer ring fine-tuning channel during starting and firepower adjustment of a valve according to an embodiment of the present invention; and FIG. 19 is a view of a gas flow change curve during adjustment of a valve according to an embodiment of the present invention. When α = 0°, both the inner ring main gas outlet channel 12 and the inner ring fine-tuning channel 120 are completely staggered from the inner ring fire gas outlet groove 220; and both the outer ring main gas outlet channel 13 and the outer ring fine-tuning channel 130 are completely staggered from the outer ring fire gas outlet 23; at this time, no gas enters into the inner or outer ring channels. When the valve core 20 is rotated such that α = 30°, the inner ring main gas outlet channel 12 is just staggered from the inner ring fire gas outlet groove 220, and no gas flows into the inner ring main gas outlet channel 12 at this time. However, when the valve core 20 is slightly turned counterclockwise, gas starts to flow into the inner ring main gas outlet channel 12, and the inner ring of the burner begins to give out fire; the outer ring main gas outlet channel 13 and the outer ring fine-tuning channel 130 are still staggered from the outer ring fire gas outlet 23, and the outer ring of the burner has no fire. When the valve core 20 is rotated such that α = 40°, the inner ring main gas outlet channel 12 partially faces the inner ring fire gas outlet groove 220, gas flows into the inner ring main gas outlet channel 12, and the inner ring of the burner gives out middle fire; the outer ring main gas outlet channel 13 is just staggered from the outer ring fire gas outlet 23, and at this time, no gas flows into the outer ring main gas outlet channel 13. However, when the valve core 20 is slightly turned counterclockwise, gas starts to flow into the outer ring main gas outlet channel 13, and the outer ring of the burner begins to give out fire. When the valve core 20 is rotated such that α = 90°, the inner ring main gas outlet channel 12 completely faces the inner ring fire gas outlet groove 220, the inner ring fine-tuning channel 120 partially faces the inner ring fire gas outlet groove 220, and the inner ring of the burner gives out large fire; the outer ring main gas outlet channel 13 completely faces the outer ring fire gas outlet 23, and the outer ring of the burner also gives out large fire at this moment. In the meantime, it can be viewed from FIG. 19 that upon opening of the valve 1, the gas flow entering into the burner of the gas cooker constantly rises with increase of the rotation angle, and when α = 90°, the gas flow entering into the burner reaches maximum. When the valve core 20 is rotated such that α = 140°, both the inner ring main gas outlet channel 12 and the inner ring fine-tuning channel 120 completely face the inner ring fire gas outlet groove 220, and the inner ring of the burner still gives out large fire; both the outer ring main gas outlet channel 13 and the outer ring fine-tuning channel 130 partially face the outer ring fire gas outlet 23, and the firepower in the outer ring of the burner is slightly reduced as compared with the firepower when α = 90°. When the valve core 20 is rotated such that α = 150°, both the inner ring main gas outlet channel 12 and the inner ring fine-tuning channel 120 still completely face the inner ring fire gas outlet groove 220, and the inner ring of the burner still gives out large fire; the outer ring main gas outlet channel 13 is just staggered from the outer ring fire gas outlet 23, and no gas flows into the outer ring main gas outlet channel 13, but at this time, the outer ring fine-tuning channel 130 completely faces the outer ring fire gas outlet 23, and the outer ring of the burner still gives out fire; the firepower is further reduced as compared with the firepower when α = 140°, and the outer ring of the burner enters into a fire protection state. The so-called fire protection state indicates a state in which combustion is maintained only relying on gas transported by a fine-tuning channel. When the valve core 20 is rotated such that α = 195°, the inner ring main gas outlet channel 12 partially faces the inner ring fire gas outlet groove 220, the inner ring fine-tuning channel 120 still completely faces the inner ring fire gas outlet groove 220, and the inner ring of the burner maintains larger firepower; but the outer ring fine-tuning channel 130 is just staggered from the outer ring fire gas outlet 23, no gas enters into the outer ring main gas outlet channel 13 or the outer ring fine-tuning channel 130, and the outer ring of the burner has no fire. It can be viewed from FIG. 19 that, when the valve 1 is adjusted within a range of 160° ≤ α ≤ 190°, the gas flow entering into the burner of the gas cooker changes more smoothly. With continuous rotation of the valve core 20, the firepower in the inner ring of the burner is further reduced, until the valve core 20 is rotated such that α = 210° when the inner ring main gas outlet channel 12 is just staggered from the inner ring fire gas outlet groove 220; however, at this time, the inner ring fine-tuning channel 120 still completely faces the inner ring fire gas outlet groove 220, and the inner ring of the burner enters into the fire protection state. When the valve core 20 is continuously rotated such that α = 230°, the inner ring fine-tuning channel 120 completely faces the inner ring fire gas outlet groove 220, the gas flow into the inner ring fine-tuning channel 120 remains unchanged as compared with when α = 210°, the inner ring of the burner is maintained in the fire protection state all the time, and the firepower does not change; this can also be seen from FIG. 19, and the gas flow entering into the burner is kept unchanged.

Referring to FIG. 19, the valve 1 of the gas cooker in the present invention is provided with an outer ring fine-tuning channel 130 with respect to the outer ring fire gas outlet 23, and after the outer ring main gas outlet channel 13 is staggered from the outer ring fire gas outlet 23, the outer ring fine-tuning channel 130 will continue supplying gas within a certain angle rotation range, so that the valve of the gas cooker in the present invention has a smoother flow characteristic curve as compared with the valve of the existing gas cooker. In other words, when the valve in the present invention is used to adjust firepower, the situation where firepower suddenly changes when the user slightly turns the knob may not occur, thereby achieving precise control over the firepower and letting the user easily adjust the firepower to the desired level.

In view of the above, when 0° ≤ α ≤ 30°, both the inner ring main gas outlet channel 12 and the inner ring fine-tuning channel 120 are completely staggered from the inner ring fire gas outlet groove 220; both the outer ring main gas outlet channel 13 and the outer ring fine-tuning channel 130 are completely staggered from the outer ring fire gas outlet 23, and the inner and outer rings of the burner have no fire. When 30° < α < 210°, the inner ring main gas outlet channel 12 at least partially faces the inner ring fire gas outlet groove 220, and there is gas flowing into the inner ring main gas outlet channel 12. When 90° ≤ α ≤ 170°, the inner ring main gas outlet channel 12 completely faces the inner ring fire gas outlet groove and the firepower in the inner ring of the burner is larger. When 90° ≤ α ≤ 230°, the inner ring fine-tuning channel 120 at least partially faces the inner ring fire gas outlet groove 220. When 140° ≤ α ≤ 230°, the inner ring fine-tuning channel 120 completely faces the inner ring fire gas outlet groove 220. When 40° < α < 150°, the outer ring main gas outlet channel 13 at least partially faces the outer ring fire gas outlet 23. When α = 90°, the outer ring main gas outlet channel 13 completely faces the outer ring fire gas outlet 23. When 140° ≤ α < 195°, the outer ring fine-tuning channel 130 at least partially faces the outer ring fire gas outlet 23. When 150° ≤ α ≤ 160°, the outer ring fine-tuning channel 130 completely faces the outer ring fire gas outlet 23.

Further, the valve 1 of the gas cooker in the present invention may be provided with a security lock function such as a child lock when the valve core 20 is in the position where α = 0°, and the valve core 20 can be driven to rotate only when the user presses the knob downward, so as to prevent security risks brought about by abnormal operations. The valve 1 is provided with a soft stop when the valve core 20 is in the position where α = 30°, that is, when the user rotates the valve such that α = 30°, the user feels being locked, but the valve can continue rotating along the original rotation direction, thus prompting the user that the inner ring of the burner starts to give out fire. The valve 1 is provided with a hard stop when the valve core 20 is in the position where α = 90°, that is, when the user rotates the valve such that α = 90°, the valve cannot continue rotating along the original rotation direction; the valve can continue rotating along the original rotation direction only if the knob is loosened and automatically pops up, thus prompting the user that the firepower of the gas cooker has reached maximum and the firepower will be reduced if the valve continues rotating. The valve 1 is also provided with a soft stop when the valve core 20 is in the position where α = 195°, thus prompting the user that the outer ring of the gas cooker has no fire.

It should be emphasized that, although the present invention is described by taking that an outer wall of the valve core 20 is provided with an inner ring fire gas outlet groove 220 in communication with the inner ring fire gas outlet 22 as an example, the present invention is not limited thereto. Persons skilled in the art can feel free to make design based on the gas adjustment requirement. For example, as regards the valve with the knob rotating in a smaller angle range, the setting of the inner ring fire gas outlet groove can be canceled; as regards the valve needing to control the level of the outer ring fire within a larger angle range, an outer wall of the valve core may be provided with an outer ring fire gas outlet groove in communication with the outer ring fire gas outlet. Certainly, it is also feasible that the outer wall of the valve core is provided with both an inner ring fire gas outlet groove in communication with the inner ring fire gas outlet and an outer ring fire gas outlet groove in communication with the outer ring fire gas outlet. However, in any of the above situations, persons skilled in the art could completely predict that a smoother gas flow control curve than that of the valve in the prior art can be obtained through the present invention.

## Claims

1. A valve (1) for a gas cooker, the valve (1) comprising a valve body (10) and a valve core (20) rotatably disposed in the valve body (10), wherein the valve core (20) is provided with a gas inlet channel (21) in communication with a gas source, and a sidewall of the valve core (20) is provided with an inner ring fire gas outlet (22) and an outer ring fire gas outlet (23) penetrating the sidewall, **characterized in that**,
the valve body (10) is provided with an inner ring main gas outlet channel (12) and an inner ring fine-tuning channel (120) corresponding to the inner ring fire gas outlet (22), and the valve body (10) is provided with an outer ring main gas outlet channel (13) and an outer ring fine-tuning channel (130) corresponding to the outer ring fire gas outlet (23).

2. The valve according to claim 1, **characterized in that**, an outer wall of the valve core (20) is provided with an inner ring fire gas outlet groove (220) in communication with the inner ring fire gas outlet (22).

3. The valve according to claim 1, **characterized in that**, an inner diameter of the inner ring fine-tuning channel (120) is smaller than an inner diameter of the inner ring main gas outlet channel (12), and an inner diameter of the outer ring fine-tuning channel (130) is smaller than an inner diameter of the outer ring main gas outlet channel (13).

4. The valve according to claim 3, **characterized in that**, the inner diameter of the inner ring fine-tuning channel (120) is d1, wherein the d1 falls within a value range of 2.0 mm ≤ d1 ≤ 3.0 mm.

5. The valve according to claim 3, **characterized in that**, the inner diameter of the outer ring fine-tuning channel (130) is d2, wherein the d2 falls within a value range of 2.0 mm ≤ d2 ≤ 3.0 mm.

6. The valve according to claim 3, **characterized in that**, the inner diameter of the inner ring main gas outlet channel (12) is D1, wherein the D1 falls within a value range of 3.2 mm ≤ D1 ≤ 4.5 mm.

7. The valve according to claim 3, **characterized in that**, the inner diameter of the outer ring main gas outlet channel (13) is D2, wherein the D2 falls within a value range of 5.0 mm ≤ D2 ≤ 6.5 mm.

8. The valve according to claim 1, **characterized in that**, the valve body (10) is provided with an inner ring fine-tuning screw (121) and an outer ring fine-tuning screw (131), wherein the inner ring fine-tuning screw (121) adjusts gas flow of the inner ring fine-tuning channel (120), and the outer ring fine-tuning screw (131) adjusts gas flow of the outer ring fine-tuning channel (130).

9. The valve according to claim 2, **characterized in that**, the valve core (20) rotates at an angle of α relative to the valve body (10).

10. The valve according to claim 9, **characterized in that**, when 0° ≤ α ≤ 30°, both the inner ring main gas outlet channel (12) and the inner ring fine-tuning channel (120) are completely staggered from the inner ring fire gas outlet groove (220); and both the outer ring main gas outlet channel (13) and the outer ring fine-tuning channel (130) are completely staggered from the outer ring fire gas outlet (23).

11. The valve according to claim 9, **characterized in that**, when 30° < α < 210°, the inner ring main gas outlet channel (12) at least partially faces the inner ring fire gas outlet groove (220).

12. The valve according to claim 11, **characterized in that**, when 90° ≤ α ≤ 170°, the inner ring main gas outlet channel (12) completely faces the inner ring fire gas outlet groove (220).

13. The valve according to claim 9, **characterized in that**, when 90° ≤ α ≤ 230°, the inner ring fine-tuning channel (120) at least partially faces the inner ring fire gas outlet groove (220).

14. The valve according to claim 9, **characterized in that**, when 40° <α < 150°, the outer ring main gas outlet channel (13) at least partially faces the outer ring fire gas outlet (23).

15. A gas cooker with a valve (1) according to one of claims 1-14.

## Patentansprüche

1. Ventil (1) für einen Gasherd, das einen Ventilkörper (10) und einen Ventileinsatz (20) umfasst, der drehbar in dem Ventilkörper (10) angeordnet ist, wobei der Ventileinsatz (20) mit einem Gaseinlasskanal (21) versehen ist, der mit einer Gasquelle in Verbindung steht, und eine Seitenwand des Ventileinsatzes (20) mit einem Innenringflammen-Gasauslass (22) und einem Außenringflammen-Gasauslass (23) versehen ist, die durch die Seitenwand hindurchgehen, **dadurch gekennzeichnet, dass**
der Ventilkörper (10) mit einem Innenring-Hauptgasauslasskanal (12) und einem Innenring-Feineinstellkanal (120), die dem Innenringflammen-Gasauslass (22) entsprechen, und mit einem Außenring-Hauptgasauslasskanal (13) und einem Außenring-Feineinstellkanal (130) versehen ist, die dem Außenringflammen-Gasauslass (23) entsprechen.

2. Ventil nach Anspruch 1, **dadurch gekennzeichnet, dass** eine Außenwand des Ventileinsatzes (20) mit einer Innenringflammen-Gasauslassnut (220) versehen ist, die mit dem Innenringflammen-Gasauslass (22) in Verbindung steht.

3. Ventil nach Anspruch 1, **dadurch gekennzeichnet, dass** ein Innendurchmesser des Innenring-Feineinstellkanals (120) geringer ist als ein Innendurchmesser des Innenring-Hauptgasauslasskanals (12) und ein Innendurchmesser des Außenring-Feineinstellkanals (130) geringer ist als ein Innendurchmesser des Außenring-Hauptgasauslasskanals (13).

4. Ventil nach Anspruch 3, **dadurch gekennzeichnet, dass** der Innendurchmesser des Innenring-Feineinstellkanals (120) d1 ist, wobei d1 in einen Wertebereich von 2,0 mm ≤ d1 ≤ 3,0 mm fällt.

5. Ventil nach Anspruch 3, **dadurch gekennzeichnet, dass** der Innendurchmesser des Außenring-Feineinstellkanals (130) d2 ist, wobei d2 in einen Wertebereich von 2,0 mm ≤ d2 ≤ 3,0 mm fällt.

6. Ventil nach Anspruch 3, **dadurch gekennzeichnet, dass** der Innendurchmesser des Innenring-Hauptgasauslasskanals (12) D1 ist, wobei D1 in einen Wertebereich von 3,2 mm ≤ D1 ≤ 4,5 mm fällt.

7. Ventil nach Anspruch 3, **dadurch gekennzeichnet, dass** der Innendurchmesser des Außenring-Hauptgasauslasskanals (13) D2 ist, wobei D2 in einen Wertebereich von 5,0 mm ≤ D2 ≤ 6,5 mm fällt.

8. Ventil nach Anspruch 1, **dadurch gekennzeichnet, dass** der Ventilkörper (10) mit einer Innenring-Feineinstellschraube (121) und einer Außenring-Feineinstellschraube (131) versehen ist, wobei die Innenring-Feineinstellschraube (121) den Gasdurchfluss des Innenring-Feineinstellkanals (120) und die Außenring-Feineinstellschraube (131) den Gasdurchfluss des Außenring-Feineinstellkanals (130) verstellt.

9. Ventil nach Anspruch 2, **dadurch gekennzeichnet, dass** sich der Ventileinsatz (20) in einem Winkel α in Bezug auf den Ventilkörper (10) dreht.

10. Ventil nach Anspruch 9, **dadurch gekennzeichnet, dass**, wenn 0° ≤ α ≤ 30°, sowohl der Innenring-Hauptgasauslasskanal (12) als auch der Innenring-Feineinstellkanal (120) zur Innenringflammen-Gasauslassnut (220) komplett versetzt sind und sowohl der Außenring-Hauptgasauslasskanal (13) als auch der Außenring-Feineinstellkanal (130) zum Außenringflammen-Gasauslass (23) komplett versetzt sind.

11. Ventil nach Anspruch 9, **dadurch gekennzeichnet, dass** der Innenring-Hauptgasauslasskanal (12), wenn 30° < α < 210°, zumindest teilweise zur Innenringflammen-Gasauslassnut (220) weist.

12. Ventil nach Anspruch 11, **dadurch gekennzeichnet, dass** der Innenring-Hauptgasauslasskanal (12), wenn 90° ≤ α ≤ 170°, komplett zur Innenringflammen-Gasauslassnut (220) weist.

13. Ventil nach Anspruch 9, **dadurch gekennzeichnet, dass** der Innenring-Feineinstellkanal (120), wenn 90° ≤ α ≤ 230°, zumindest teilweise zur Innenringflammen-Gasauslassnut (220) weist.

14. Ventil nach Anspruch 9, **dadurch gekennzeichnet, dass** der Außenring-Hauptgasauslasskanal (13), wenn 40° < α < 150°, zumindest teilweise zum Außenringflammen-Gasauslass (23) weist.

15. Gasherd mit einem Ventil (1) nach einem der Ansprüche 1 bis 14.

## Revendications

1. Soupape (1) pour une cuisinière à gaz, la soupape (1) comprenant un corps de soupape (10) et un obus de soupape (20) disposé de façon rotative dans le corps de soupape (10), dans laquelle l'obus de soupape (20) est doté d'un conduit d'entrée de gaz (21) en communication avec une source de gaz, et une paroi latérale de l'obus de soupape (20) est dotée d'une sortie de gaz à feu d'anneau intérieur (22) et d'une sortie de gaz à feu d'anneau extérieur (23) pénétrant la paroi latérale, **caractérisée en ce que** le corps de soupape (10) est doté d'un conduit de sortie de gaz principal d'anneau intérieur (12) et d'un conduit de réglage fin d'anneau intérieur (120) correspondant à la sortie de gaz à feu d'anneau intérieur (22), et le corps de soupape (10) est doté d'un conduit de sortie de gaz principal d'anneau extérieur (13) et d'un conduit de réglage fin d'anneau extérieur (130) correspondant à la sortie de gaz à feu d'anneau extérieur (23).

2. Soupape selon la revendication 1, **caractérisée en ce qu'**une paroi extérieure de l'obus de soupape (20) est dotée d'une rainure de sortie de gaz à feu d'anneau intérieur (220) en communication avec la sortie de gaz à feu d'anneau intérieur (22).

3. Soupape selon la revendication 1, **caractérisée en ce qu'**un diamètre intérieur du conduit de réglage fin d'anneau intérieur (120) est inférieur à un diamètre intérieur du conduit de sortie de gaz principal d'anneau intérieur (12), et un diamètre intérieur du conduit de réglage fin d'anneau extérieur (130) est inférieur à un diamètre intérieur du conduit de sortie principal d'anneau extérieur (13).

4. Soupape selon la revendication 3, **caractérisée en ce que** le diamètre intérieur du conduit de réglage fin d'anneau intérieur (120) est d1, d1 correspondant à 2,0 mm ≤ d1 ≤ 3,0 mm.

5. Soupape selon la revendication 3, **caractérisée en ce que** le diamètre intérieur du conduit de réglage fin d'anneau extérieur (130) est d2, d2 correspondant à 2,0 mm ≤ d2 ≤ 3,0 mm.

6. Soupape selon la revendication 3, **caractérisée en ce que** le diamètre intérieur du conduit de sortie de gaz principal d'anneau intérieur (12) est D1, D1 correspondant à 3,2 mm ≤ D1 ≤ 4,5 mm.

7. Soupape selon la revendication 3, **caractérisée en ce que** le diamètre intérieur du conduit de sortie de gaz principal d'anneau extérieur (13) est D2, D2 correspondant à 5,0 mm ≤ D2 ≤ 6,5 mm.

8. Soupape selon la revendication 1, **caractérisée en ce que** le corps de soupape (10) est doté d'une vis de réglage fin d'anneau intérieur (121) et d'une vis de réglage fin d'anneau extérieur (131), dans laquelle la vis de réglage fin d'anneau intérieur (121) ajuste le flux de gaz du conduit de réglage fin d'anneau intérieur (120) et la vis de réglage fin d'anneau extérieur (131) ajuste le flux de gaz du conduit de réglage fin d'anneau extérieur (130).

9. Soupape selon la revendication 2, **caractérisée en ce que** l'obus de soupape (20) tourne selon un angle α par rapport au corps de soupape (10).

10. Soupape selon la revendication 9, **caractérisée en ce que**, lorsque 0° ≤ α ≤ 30°, à la fois le conduit de sortie de gaz principal d'anneau intérieur (12) et le conduit de réglage fin d'anneau intérieur (120) sont intégralement décalés de la rainure de sortie de gaz à feu d'anneau intérieur (220) et à la fois le conduit de sortie de gaz principal d'anneau extérieur (13) et le conduit de réglage fin d'anneau extérieur (130) sont intégralement décalés de la sortie de gaz à feu d'anneau extérieur (23).

11. Soupape selon la revendication 9, **caractérisée en ce que**, lorsque 30° < α < 210°, le conduit de sortie de gaz principal d'anneau intérieur (12) fait au moins partiellement face à la rainure de sortie de gaz à feu d'anneau intérieur (220).

12. Soupape selon la revendication 11, **caractérisée en ce que**, lorsque 90° ≤ α ≤ 170°, le conduit de sortie de gaz principal d'anneau intérieur (12) fait intégralement face à la rainure de sortie de gaz à feu d'anneau intérieur (220).

13. Soupape selon la revendication 9, **caractérisée en ce que**, lorsque 90° ≤ α ≤ 230°, le conduit de réglage fin d'anneau intérieur (120) fait au moins partiellement face à la rainure de sortie de gaz à feu d'anneau intérieur (220).

14. Soupape selon la revendication 9, **caractérisée en ce que**, lorsque 40° < α < 150°, le conduit de sortie de gaz principal d'anneau extérieur (13) fait au moins partiellement face à la sortie de gaz à feu d'anneau extérieur (220).

15. Cuisinière à gaz avec une soupape (1) selon l'une des revendications 1 à 14.
